(19) Europäisches Patentamt
European Patent Office
Office européen des brevets

(11) **EP 3 846 108 A1**

(12) **DEMANDE DE BREVET EUROPEEN**

(43) Date de publication:
**07.07.2021 Bulletin 2021/27**

(51) Int Cl.:
***G06Q 30/02*** *(2012.01)* ***F24D 19/10*** *(2006.01)*

(21) Numéro de dépôt: **20216522.1**

(22) Date de dépôt: **22.12.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **02.01.2020 FR 2000016**

(71) Demandeur: **Delta Dore**
**35270 Bonnemain (FR)**

(72) Inventeurs:
• LEDUC, Benoît
  **35270 BONNEMAIN (FR)**
• LEGUILLON, Maxime
  **35270 BONNEMAIN (FR)**
• PLEVIN, Jacques
  **35270 BONNEMAIN (FR)**
• LE DUC, Minh Khang
  **35270 BONNEMAIN (FR)**

(74) Mandataire: **Cabinet Le Guen Maillet**
**3, impasse de la Vigie**
**CS 71840**
**35418 Saint-Malo Cedex (FR)**

(54) **PROCÉDÉ ET DISPOSITIF DE DÉTERMINATION DE PROFILS DE CONSOMMATION D'EAU CHAUDE POUR DES BESOINS D'HYGIENE CORPORELLE**

(57) La présente invention concerne un dispositif et un procédé de détermination de profils de consommation d'eau chaude pour des besoins d'hygiène corporelle. L'invention :
- mesure (E30) du débit d'eau chaude consommée,
- extrait (E31) à partir du débit d'eau chaude mesuré d'une consommation d'eau chaude pour des besoins d'hygiène corporelle, des variables caractéristiques,
- forme (E31) un profil de la consommation d'eau chaude consommée pour les besoins d'hygiène corporelle,
- classifie (E32) le profil parmi un ensemble de profils obtenus.

Fig. 3

EP 3 846 108 A1

**Description**

DOMAINE TECHNIQUE

L'invention concerne un procédé et un dispositif de détermination de profils de consommation d'eau chaude pour des besoins d'hygiène corporelle.

ETAT DE LA TECHNIQUE ANTERIEURE

La consommation d'eau chaude dans un foyer a un impact à la fois financier pour le foyer et écologique pour la société.

Les utilisateurs d'eau chaude pour des besoins d'hygiène corporelle peuvent difficilement aujourd'hui évaluer leur consommation d'eau chaude lorsqu'ils prennent des douches ou des bains. En mesurant le temps passé sous la douche ou en évaluant le volume d'eau compris dans une baignoire, il est possible d'évaluer de manière très grossière leur consommation d'eau.

Aujourd'hui, il n'existe pas d'outils précis et automatiques qui permettent de déterminer la consommation d'eau chaude de chaque individu présent dans un foyer.

Il est alors souhaitable de pallier ces inconvénients de l'état de la technique.

EXPOSE DE L'INVENTION

La présente invention a pour but de résoudre les inconvénients de l'art antérieur en proposant un dispositif et un procédé et un dispositif de détermination de profils de consommation d'eau chaude pour des besoins d'hygiène corporelle.

A cette fin, l'invention concerne un procédé de détermination de profils de consommation d'eau chaude pour des besoins d'hygiène corporelle caractérisé en ce que le procédé comporte les étapes de :

- mesure du débit d'eau chaude consommée,
- extraction, à partir du débit d'eau chaude mesuré d'une consommation d'eau chaude pour des besoins d'hygiène corporelle, de variables caractéristiques,
- formation d'un profil de la consommation d'eau chaude consommée pour les besoins d'hygiène corporelle,
- classification du profil parmi un ensemble de profils obtenus.

L'invention concerne aussi un dispositif de détermination de profils de consommation d'eau chaude pour des besoins d'hygiène corporelle caractérisé en ce que le dispositif comporte :

- des moyens de mesure du débit d'eau chaude consommée,
- des moyens d'extraction, à partir du débit d'eau chaude mesuré d'une consommation d'eau chaude pour des besoins d'hygiène corporelle, de variables caractéristiques,
- des moyens de formation d'un profil de la consommation d'eau chaude consommée pour les besoins d'hygiène corporelle,
- des moyens de classification du profil parmi un ensemble de profils obtenus.

Ainsi, la présente invention fournit un outil précis et automatique qui permet de déterminer la consommation d'eau chaude de chaque individu présent dans un foyer de manière à inciter le ou les individus du foyer à réduire leur consommation d'eau chaude.

Selon un mode particulier, la consommation d'eau chaude pour des besoins d'hygiène corporelle est une consommation liée à une prise de douche ou à un bain.

Selon un mode particulier, le procédé comporte en outre les étapes de :

- obtention, par l'intermédiaire d'une interface homme machine et pendant une période de temps donnée, de données identifiant l'individu désirant prendre la douche,
- mémorisation du profil de consommation d'eau chaude pour les besoins d'hygiène corporelle de l'individu identifié,
- identification, après la période donnée, de l'individu ayant consommé de l'eau chaude pour des besoins d'hygiène corporelle, à partir des mesures du débit d'eau chaude consommée et du profil de l'individu.

Ainsi, l'individu n'a besoin de s'identifier uniquement pendant une période de temps donnée.

Selon un mode particulier, le procédé comporte les étapes de détermination du début de la consommation d'eau chaude pour les besoins d'hygiène corporelle après la période donnée et de détermination de la fin de la consommation d'eau chaude pour les besoins d'hygiène corporelle pendant ou après la période donnée.

Selon un mode particulier, le procédé comporte en outre les étapes de :

- détermination du début de la consommation d'eau chaude pour les besoins d'hygiène corporelle,
- détermination de la fin de la consommation d'eau chaude pour les besoins d'hygiène corporelle.

L'invention concerne aussi un programme d'ordinateur, caractérisé en ce qu'il comprend des instructions pour mettre en œuvre, par un dispositif, le procédé selon le premier aspect, lorsque ledit programme est exécuté par un processeur dudit dispositif.

L'invention concerne aussi des moyens de stockage, caractérisés en ce qu'ils stockent un programme d'ordinateur comprenant des instructions pour mettre en œuvre, par un dispositif, le procédé selon le premier aspect lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] représente schématiquement un système de détermination de profils de consommation d'eau chaude pour des besoins d'hygiène corporelle selon la présente invention ;
[Fig. 2] illustre schématiquement un exemple d'architecture matérielle d'un contrôleur selon la présente invention ;
[Fig. 3] illustre schématiquement un exemple de l'algorithme général de détermination de profils de consommation d'eau chaude pour des besoins d'hygiène corporelle selon la présente invention ;
[Fig. 4] représente un exemple de mesure de débit d'eau chaude ;
[Fig. 5] représente un exemple de débit moyen d'eau chaude mesuré sur une fenêtre glissante de 10 min ;
[Fig. 6] représente un exemple d'algorithme de détection de fin de douche qui est exécuté par le contrôleur 10 pendant le mode de classification et dans le cas où le système ne comprend pas d'interface homme machine ;
[Fig. 7] représente un exemple d'algorithme d'extraction de caractéristiques qui est exécuté par le contrôleur dans le mode de classification et dans le cas où le système ne comprend pas d'interface homme machine ;
[Fig. 8] représente un exemple d'algorithme d'extraction de caractéristiques qui est exécuté par le contrôleur dans le mode d'apprentissage dans le cas où le système comprend une interface homme machine avec laquelle l'utilisateur s'identifie ;
[Fig. 9] représente un exemple d'algorithme de remplissage du tableau profil utilisateur pendant la phase d'apprentissage ;
[Fig. 10] représente un exemple d'algorithme de classification à partir du tableau profil utilisateur ;
[Fig. 11] représente un exemple d'algorithme de remplissage du tableau profil groupe dans le cas où le système ne comprend pas d'interface homme machine.

EXPOSE DETAILLE DE MODES DE REALISATION

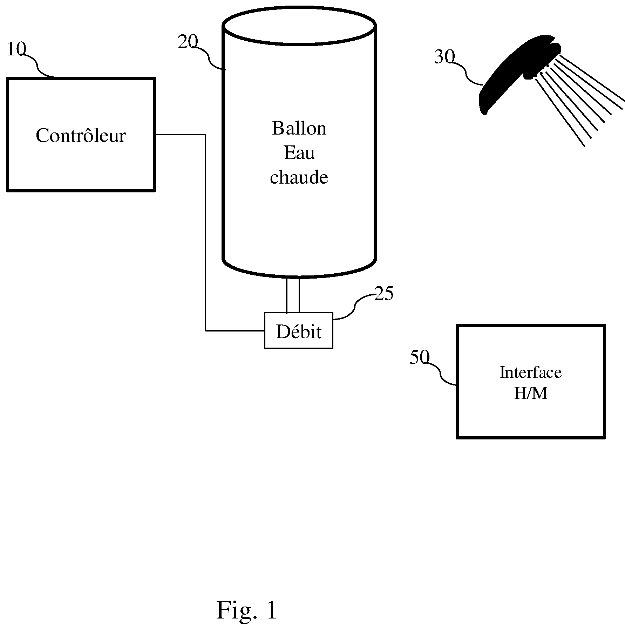

La Fig. 1 représente schématiquement un système de détermination de profils de consommation d'eau chaude pour des besoins d'hygiène corporelle selon la présente invention.

Le système comporte un contrôleur 10, un ballon 20 d'eau chaude, une interface homme machine 50 permettant de paramétrer et/ou d'interroger le contrôleur 10, un débit mètre 25 et des moyens de puisage 30 de l'eau comprise dans le ballon 20.

Le ballon 20 est un ballon d'eau chaude, par exemple un ballon d'eau chaude à stratification.

La densité de l'eau varie avec sa température. De manière simplifiée, plus l'eau est froide, plus elle est dense. Un litre d'eau froide est donc plus lourd qu'un litre d'eau chaude.

De par cette propriété, des eaux chaudes et froides mises dans un même contenant ont tendance à rester séparées en couches (en strates d'où le nom de stratification), les eaux chaudes au-dessus, les eaux froides en-dessous.

D'autre part, l'eau étant thermiquement relativement isolante, les échanges thermiques entre couches de températures différentes sont faibles, cela permet à l'organisation en couches de températures de durer. Ainsi, la stratification est un phénomène stable.

Lors d'un puisage, l'eau chaude du ballon sort par le haut et est remplacée par de l'eau froide qui entre dans le bas du ballon. La sortie d'eau chaude et l'entrée d'eau froide se font au même débit pour pouvoir se compenser directement et avoir toujours la même quantité d'eau dans le ballon. Le phénomène de stratification permet aux eaux de températures différentes de ne pas se mélanger. Pour améliorer cette stratification, les ballons respectent certaines règles telles que l'eau chaude est prélevée par le haut du ballon (ou par le bas via une canne), l'eau froide est introduite par le bas (ou par le haut via une canne qui amène l'eau en bas) le plus doucement possible.

Le dispositif 25 de mesure de débit de l'eau qui sort du ballon est relié au contrôleur 10, par l'intermédiaire d'une liaison sans fil ou filaire.

La mesure du débit est par exemple réalisée avec une micro-turbine associée à un capteur à effet hall qui produit un signal d'impulsion correspondant au débit. La circulation d'eau dans le capteur fait tourner l'élément rotatif. La vitesse de rotation varie en fonction du flux (débit volumique).

La fréquence du signal impulsionnel en sortie du capteur à effet hall est proportionnelle au débit. La relation de proportionnalité est effective entre la fréquence minimale fmin et la fréquence maximale fmax. Par exemple, les valeurs fmin et fmax pour le capteur à effet hall sont respectivement 11Hz et 250Hz.

La relation de proportionnalité est donnée par $d = a * f$, avec :

d : débit de l'eau circulant dans le capteur, exprimé en L.min-1,

f : fréquence du signal impulsionnel en sortie du capteur, exprimée en Hz

a: coefficient de proportionnalité qui dépend du capteur, exprimé en L.s.min-1 (a = 0.15 pour le capteur utilisé).

Le signal d(n) correspond à la suite des p dernières valeurs du débit d'eau échantillonnées à la fréquence fe.

A chaque t(n), le débit d(n) est remis à jour.

Le débit en sortie de ballon 20 pendant une douche dépend de la température de la douche, de la température de l'eau froide et enfin de la température de l'eau chaude en sortie du ballon 20. La plage de température considérée pour les douches va de 30°C à 40°C. Les douches froides et fraiches (respectivement de 10 à 20°C et de 20 à 30°C) ne sont pas prises en compte. La température moyenne annuelle de l'eau froide est par exemple de 16°C, cependant la température moyenne de l'eau froide peut augmenter jusqu'à 21°C pour la période estivale. Par exemple, la température en sortie de ballon est de l'ordre de 55°C à 60°C.

Dans ces conditions, le niveau minimum du débit à mesurer pendant une douche est : dmin_douche = 0.23.ddouche,

avec :

ddouche : débit d'eau de la douche,

la température d'eau froide maximale TEF_max = 21°C,

la température minimale d'eau de la douche Tdouche_min = 30°C,

la température maximale d'eau chaude au niveau du ballon TEC_max = 60°C.

Le seuil de détection du débit est déterminé de la manière suivante :

Le débit d'une douche varie de 15 à 20 L.min-1, le débit minimal dmin_douche = 3.45, la température maximale d'eau chaude au niveau du ballon TEC_max = 60°C.

Le seuil de détection du débit dTHRESHOLD est inférieur à dmin_douche pour le signal fourni par le débitmètre Le seuil de détection du débit permet de détecter les soutirages à l'usage des douches. Par exemple, le seuil de détection du débit dTHRESHOLD est égal à 3 L.min-1.

La connaissance des valeurs de TEF et de TEC permet, selon un mode particulier, d'adapter le seuil de détection dTHRESHOLD en fixant Tdouche_min = 30°C par :

$$dTHRESHOLD = 15 * (30 - TEF)/(TEC - TEF).$$

Afin de simplifier l'installation et la rendre accessible au grand public, le dispositif 25 de mesure de débit de l'eau qui sort du ballon d'eau chaude est livré avec un flexible qu'il suffit de raccorder à la sortie d'eau chaude.

L'interface homme machine 50 est par exemple implémentée sous la forme d'un boîtier comportant une interface homme machine.

L'interface homme machine 50 permet de paramétrer le système en définissant par exemple le nom d'au moins un utilisateur, la fourniture de bilan des consommations d'eau chaude journalière, hebdomadaire et annuelle pour l'ensemble du foyer ou pour chaque individu présent dans le foyer.

Ces bilans permettent de connaître la quantité d'eau chaude consommée par chaque utilisateur et est un moyen d'encourager les utilisateurs à économiser celle-ci en comptant sur une prise de conscience, ou en stimulant la fibre compétitrice des utilisateurs.

Ces bilans permettent aussi de fournir des recommandations explicites.

L'interface homme-machine 50 est utilisée afin que les utilisateurs s'identifient avant leur douche ou leur bain.

Ainsi, il est possible d'affecter la quantité d'eau consommée à l'utilisateur qui s'est identifié. Il est possible aussi d'apprendre de manière supervisée les profils des utilisateurs. Il est à remarquer ici que l'interface homme machine 50 est un élément optionnel et lorsqu'elle n'est pas présente, l'apprentissage est réalisé de manière non-supervisée afin d'établir des groupes de profils.

On distingue les termes « usage » et « profil ».

L'usage correspond au poste pour lequel l'eau chaude est soutirée.

La typologie des usages est limitée à deux catégories : l'usage de la douche d'une part et le reste des soutirages d'autre part.

Le profil est le pattern du signal fourni par le débitmètre 25 correspondant à l'utilisateur lorsqu'il prend sa douche. Chaque utilisateur peut avoir plusieurs profils selon qu'il prenne une douche ou un bain, ou s'il les prend de manière différente.

Un foyer est occupé par plusieurs habitants susceptibles d'utiliser la douche, par exemple un utilisateur A et un utilisateur B,

Dans une période d'apprentissage, l'utilisateur A, avant de prendre sa douche, indique sur l'interface homme machine 50 son identité : identité A.

L'utilisateur prend ensuite sa douche, le débit d'eau chaude mesuré par le débitmètre 50 constitue le profil de consommation de l'utilisateur A pour cette douche : P(A, i). La fin de la douche n'est pas signalée par l'utilisateur, elle est détectée automatiquement selon la présente invention.

Le profil de consommation est caractérisé et sauvegardé sous l'identité A.

Le scénario est identique pour les autres utilisateurs.

De manière à éviter que l'utilisateur s'identifie à chaque fois qu'il prend une douche ou un bain, la présente invention dispose d'un mode de fonctionnement dit de classification. En effet, la période pendant laquelle les utilisateurs s'identifient doit être de courte durée, par exemple pendant environ 15 jours, ce qui dans le meilleur des cas correspond à une quinzaine de profils d'apprentissage par utilisateur.

Dans le mode de fonctionnement classification, lorsque l'utilisateur A s'apprête à prendre une douche, celui-ci n'indique pas son identité.

Pendant la douche, le débitmètre 25 mesure le débit d'eau chaude. Dans le mode de fonctionnement classification, la présente invention détecte le début et la fin de la douche de manière automatique afin d'extraire le profil de l'utilisateur. Cette tâche revient à isoler l'usage de la douche des autres usages.

Dans un second temps, le profil est comparé aux caractéristiques des profils des différents utilisateurs mémorisés dans le contrôleur 10. Le profil le plus proche est attribué à l'utilisateur A. La quantité d'eau chaude utilisée est alors attribuée à l'utilisateur A.

Le contrôleur 10 fournit une quantité d'eau chaude utilisée pour chaque usage détecté et l'identité de l'utilisateur ou du groupe s'ils existent.

Comme cela a été précédemment indiqué, l'interface homme machine 50 est un élément optionnel. Lorsque l'interface homme machine 50 ne fait pas partie du système, la présente invention établit des profils de manière non-supervisée puisque lorsque l'utilisateur prend une douche, l'utilisateur ne s'identifie pas.

Le profil est ensuite comparé aux profils sauvegardés et est associé à un groupe de profils. Dans ce fonctionnement, le système établit un tableau profil-groupe indépendant des utilisateurs. L'attribution du groupe (ou de plusieurs groupes) à un utilisateur peut être réalisée manuellement.

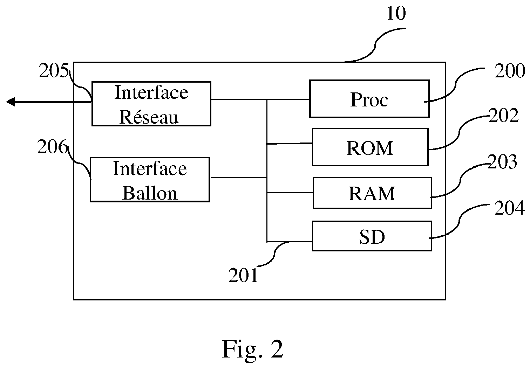

Dans la présente invention, on considère qu'un utilisateur, lorsqu'il prend une douche, exécute un enchaînement d'actions qui varie peu d'une douche à l'autre et qui lui sont propres, au sens où l'enchaînement d'actions ne dépend que de lui. Est toutefois pris en compte le fait que l'utilisation de la douche peut varier d'une douche à l'autre, par exemple, le lavage des cheveux ou pas, une douche rapide ou pas. La présente invention tient compte donc du fait qu'il puisse y avoir plusieurs profils pour un même utilisateur. La Fig. 2 illustre schématiquement un exemple d'architecture matérielle d'un contrôleur selon la présente invention.

Le contrôleur 10 comprend :

- un processeur, micro-processeur, ou microcontrôleur 200 ;
- une mémoire volatile 203 ;
- une mémoire non volatile 202 ;
- éventuellement, un lecteur 204 de medium de stockage tel qu'un lecteur de carte SD (Secure Digital Card en anglais ou Carte Numérique Sécurisée en français) ou un disque dur ;
- une interface réseau 205 comportant une interface Wi-Fi et/ou Zigbee et/ou X3D (nom commercial d'une liaison sans fil commercialisée par la demanderesse) ;
- une interface entrée sortie permettant d'obtenir le débit sortant du ballon ;
- un bus de communication 201 reliant le processeur 200 à la mémoire ROM 202, à la mémoire RAM 203, au lecteur de médium de stockage 204 et aux interfaces 205 et 206.

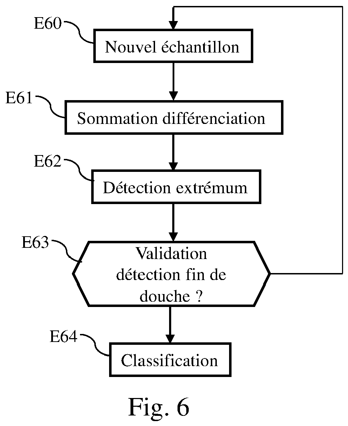

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque dispositif 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec les Figs. 6 à 11.

Tout ou partie du procédé décrit en relation avec les Figs. 6 à 11 peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

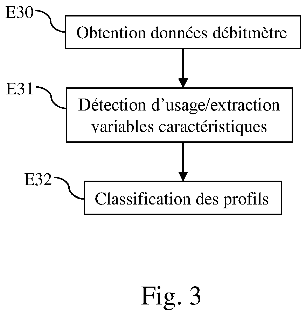

La Fig. 3 illustre schématiquement un exemple de l'algorithme général de détermination de profils de consommation d'eau chaude pour des besoins d'hygiène corporelle selon la présente invention.

L'algorithme est exécuté par le contrôleur 10 et comporte trois étapes.

L'étape E30 consiste à obtenir des signaux du dispositif de mesure de débit 25 et à les convertir en valeur de débit.

L'étape E31 consiste à la détection des usages et à l'extraction des variables caractéristiques.

L'étape E32 consiste à la classification des profils.

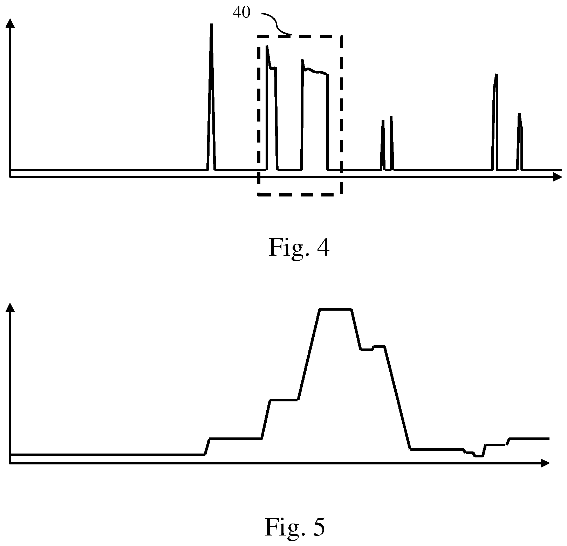

La Fig. 4 représente un exemple de mesure de débit d'eau chaude.

Dans l'exemple de la Fig. 4, la partie notée 40 est selon l'invention une partie représentative de la prise d'une douche par un utilisateur ayant le profil P(u,i).

La Fig. 5 représente un exemple de débit moyen d'eau chaude mesuré sur une fenêtre glissante de 10 min.

Les périodes longues de soutirage caractérisent les douches. Cela donne, comme on peut le voir sur la Fig. 5, des valeurs de débit moyen plus élevées qui n'apparaissent pas pour les autres usages.

La Fig. 6 représente un exemple d'algorithme de détection de fin de douche qui est exécuté par le contrôleur pendant le mode de classification et dans le cas où le système ne comprend pas d'interface homme machine.

A l'étape E60, le contrôleur 10 obtient un nouvel échantillon S(i) du débit d'eau chaude. A l'étape E61, le contrôleur 10 effectue une sommation et une différentiation à partir de l'échantillon obtenu et des p précédents échantillons où p est par exemple égal à 120 pour dix minutes.

La sommation Y0(i) est calculée en sommant les échantillons s(i) à S(i-p).

La différenciation Y1(i) est égale à Y0(i)-Y0(i-p).

A l'étape E62, le contrôleur 10 détecte un extrémum $D(i)= (Y1(i)-Y1(i-\delta))/\delta$ où $\delta > 6$ si la période d'échantillonnage est de 5 secondes.

A l'étape E63, le contrôleur 10 vérifie si une fin de douche est validée.

Une fin de douche est validée si $D(i-3).d(i)<0$ et $Y1(i-\delta)< YTHRES$ et $Y1(i) < YTHRES$ où $YTHRES$ est par exemple égal à -2.

Dans l'affirmative, le contrôleur passe à l'étape de classification. Dans la négative, le contrôleur retourne à l'étape E60.

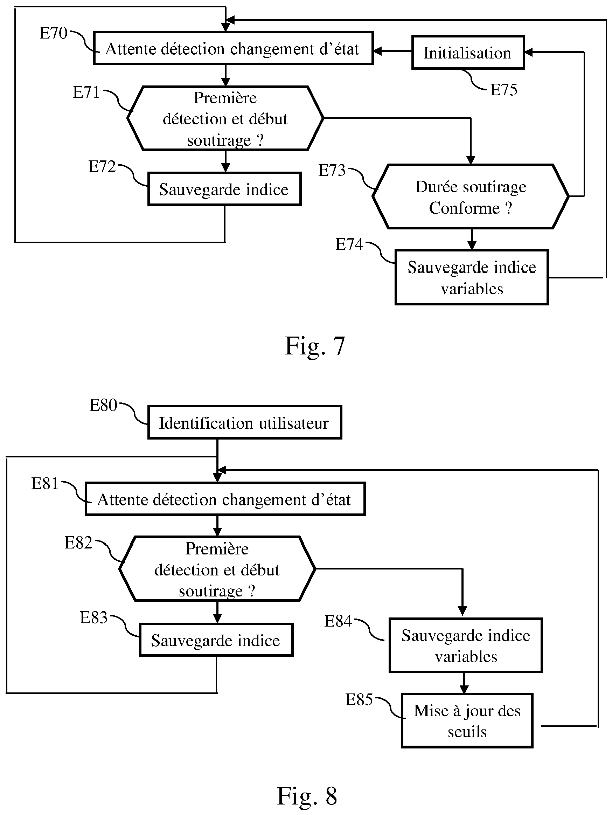

La Fig. 7 représente un exemple d'algorithme d'extraction de caractéristiques qui est exécuté par le contrôleur dans le mode de classification et dans le cas où le système ne comprend pas d'interface homme machine.

A l'étape E70, le contrôleur 10 attend une détection de changement d'état. La détection d'un changement d'état est effectuée à partir d'un échantillon de débit d(i), de l'échantillon précédent converti S(i-1).

Un échantillon converti est égal à 1 si $d(i)> dTHRESHOLD$ et à 0 sinon.

Le changement d'état est détecté si le produit scalaire $W.(S(i-1), S(i))$ est différent de 0 avec $W=(-1,1)$.

A l'étape suivante E71, le contrôleur 10 vérifie si une première détection et un début de soutirage sont détectés.

Pour cela, le contrôleur 10 vérifie si une table de variables composée de n lignes est vide. Dans l'affirmative, le contrôleur identifie une première détection. Le contrôleur identifie un début de soutirage si $W.(S(i-1), S(i))$ est égal à 1.

Dans l'affirmative, le contrôleur 10 passe à l'étape E72. Dans la négative, le contrôleur 10 passe à l'étape E73.

A l'étape E72, le contrôleur 10 mémorise la valeur de l'indice i dans une variable notée mj ainsi que la valeur $W.(S(i-1), S(i))$ dans une variable notée vj. Les variables mj et vj sont mémorisées dans une ligne de la table de variables.

Cette opération effectuée, le contrôleur 10 retourne à l'étape E70.

A l'étape E73, le contrôleur 10 vérifie si la durée de soutirage d'eau chaude est conforme. La durée de soutirage d'eau chaude est conforme si $W.(S(i-1), S(i))$ est égal à 1 et si $Ton=i-mj >Ton\_min$.

Dans l'affirmative, le contrôleur 10 passe à l'étape E74 et dans la négative, le contrôleur 10 passe à l'étape E75.

A l'étape E75, le contrôleur 10 initialise la table de variable et retourne à l'étape E70.

A l'étape E74, le contrôleur 10 mémorise la valeur de l'indice i dans la variable notée mj ainsi que la valeur $W.(S(i-1), S(i))$ dans la variable notée vj. La valeur moyenne avgj entre deux détections est mémorisée ainsi que la pente en début de la détection dans la table de variables. Cette opération effectuée, le contrôleur 10 retourne à l'étape E70.

La Fig. 8 représente un exemple d'algorithme d'extraction de caractéristiques qui est exécuté par le contrôleur dans le mode d'apprentissage dans le cas où le système comprend une interface homme machine avec laquelle l'utilisateur s'identifie.

A l'étape E80, le contrôleur 10 identifie par l'intermédiaire de l'interface homme machine 50 l'utilisateur qui souhaite prendre une douche ou un bain.

A l'étape suivante E81, le contrôleur 10 attend une détection de changement d'état. La détection d'un changement d'état est effectuée à partir d'un échantillon de débit d(i), de l'échantillon précédent converti S(i-1).

Un échantillon converti est égal à 1 si d(i)> dTHRESHOLD et à 0 sinon.

Le changement d'état est détecté si le produit scalaire W.(S(i-1), S(i)) est différent de 0 avec W=(-1,1).

A l'étape suivante E82, le contrôleur 10 vérifie si une première détection et un début de soutirage sont détectés.

Pour cela, le contrôleur 10 vérifie si une table de variables composée de n lignes est vide. Dans l'affirmative, le contrôleur identifie une première détection. Le contrôleur identifie un début de soutirage si W.(S(i-1), S(i)) est égal à 1.

Dans l'affirmative, le contrôleur 10 passe à l'étape E83. Dans la négative, le contrôleur 10 passe à l'étape E84.

A l'étape E83, le contrôleur 10 mémorise la valeur de l'indice i dans une variable notée mj ainsi que la valeur W.(S(i-1), S(i)) dans une variable notée vj. Les variables mj et vj sont mémorisées dans une ligne de la table de variables.

Cette opération effectuée, le contrôleur 10 retourne à l'étape E81.

A l'étape E84, le contrôleur 10 mémorise la valeur de l'indice i dans la variable notée mj ainsi que la valeur W.(S(i-1), S(i)) dans la variable notée vj. La valeur moyenne avgj entre deux détections est mémorisée ainsi que la pente en début de la détection dans la table de variables.

A l'étape suivante E85, le contrôleur met à jour les seuils Ton_min.et Toff_min.

Si la dernière période est un soutirage, vj-i est égal à 1 et si mj-1 -mj-2< Ton_min, Ton_min= mj-1 -mj-2.

Si la dernière période n'est pas un soutirage et si mj-1 -mj-2>Toff_max, Toff_max= mj-1 - mj-2.

Cette opération effectuée, le contrôleur 10 retourne à l'étape E81.

On distingue deux modes de fonctionnement : en apprentissage et en classification.

En apprentissage, on construit les profils, en classification, on estime l'utilisateur à partir du profil en cours comparé aux profils sauvegardés.

A chaque nouveau tableau de variable destiné à l'apprentissage ou à la classification, on construit le vecteur de profil constitué de :

Nombre de soutirages :

$$N = \text{Somme}(vi == 1),$$

i = (0,..., n-1)

Les valeurs de slpi, pour i = 2k-1 et k = (1,..., n/2)
Les valeurs de avgi, pour i = 2k-1 et k = (1,..., n/2)

Les valeurs des périodes :

$$pi+1 = mi+1 - mi,$$

pour i = (0,..., n-2)

Jour de la semaine
J∈{1, 2, 3, 4, 5, 6, 7} pour {lundi, mardi, ..., dimanche}
Heure de la journée
H∈{0, ..., 24}

On définit le vecteur profil P :

$$P = (N, slp1, ..., slpn/2, avg1, ..., avg\,n/2, p1, ..., pn-1, J, H)$$

La longueur du vecteur est 1 = n+3 avec n qui dépend du nombre maximal de soutirages Nmax :

$$n = 2.Nmax$$

Pour simplifier, on utilise la notation suivante :

$$P(u, i) = (x1, x2, ..., xn+3)$$

avec u : utilisateur, i : indice

Le calcul des variables caractéristiques et du vecteur de profil permet de limiter la taille des informations à sauvegarder.

Pendant la phase d'apprentissage, un tableau appelé tableau profil utilisateur est construit, le tableau profil utilisateur est constitué d'une pluralité de lignes.

Chaque ligne comporte un indice de profil, un vecteur de profil et un identifiant d'utilisateur.

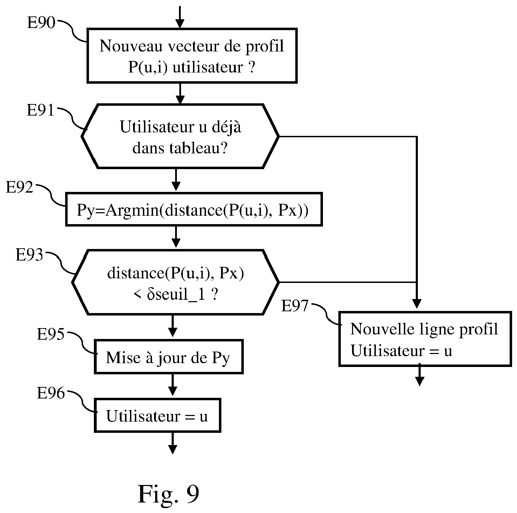

La Fig. 9 représente un exemple d'algorithme de remplissage du tableau profil utilisateur pendant la phase d'apprentissage.

A l'étape E90, le contrôleur 10 forme un nouveau vecteur de profil P(u,i) pour l'utilisateur u.

A l'étape E91, le contrôleur 10 vérifie si l'utilisateur u est déjà dans le tableau profil utilisateur.

Dans l'affirmative, le contrôleur 10 passe à l'étape E92. Dans la négative, le contrôleur 10 passe à l'étape E97.

A l'étape E92, le contrôleur 10 détermine la distance minimale séparant le vecteur de profil P(u,i) de chaque vecteur de profil Px mémorisé dans le tableau profil utilisateur. Le vecteur de profil pour lequel la distance est minimale est noté Py.

A l'étape E93, le contrôleur 10 vérifie si la distance minimale obtenue est inférieure à un seuil $\delta$seuil_1 prédéterminé. Dans l'affirmative, le contrôleur 10 passe à l'étape E95. Dans la négative, le contrôleur 10 passe à l'étape E97.

A l'étape E95, le contrôleur 10 met à jour le vecteur de profil Py de la manière suivante : Py=(P(u,i)+Py)/2.

A l'étape suivante E96, le contrôleur 10 affecte le vecteur de profil Py à l'utilisateur u. Cette opération effectuée, le contrôleur 10 retourne à l'étape E90.

A l'étape E95, le contrôleur 10 crée une nouvelle ligne dans le tableau profil utilisateur pour l'utilisateur u.

Cette opération effectuée, le contrôleur 10 retourne à l'étape E90.

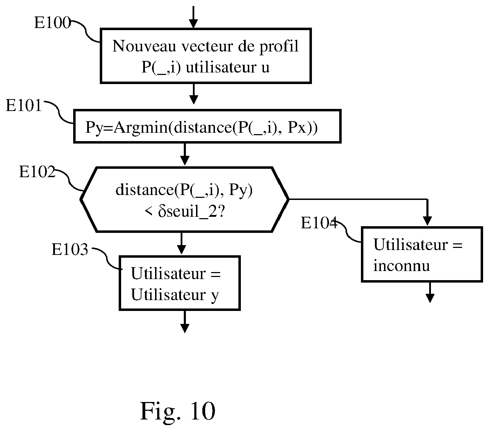

La Fig. 10 représente un exemple d'algorithme de classification à partir du tableau profil utilisateur.

A l'étape E100, le contrôleur 10 sélectionne un nouveau vecteur de profil P(_,i).

A l'étape E101, le contrôleur 10 détermine la distance minimale séparant le vecteur de profil P(u,i) de chaque vecteur de profil Px mémorisé dans le tableau profil utilisateur. Le vecteur de profil pour lequel la distance est minimale est noté Py.

A l'étape E102, le contrôleur 10 vérifie si la distance minimale obtenue est inférieure à un seuil $\delta$seuil_2 prédéterminé. Dans l'affirmative, le contrôleur 10 passe à l'étape E103. Dans la négative, le contrôleur 10 passe à l'étape E104.

A l'étape suivante E103, le contrôleur 10 affecte le vecteur de profil Py à l'utilisateur u. Cette opération effectuée, le contrôleur 10 retourne à l'étape E100.

A l'étape suivante E104, le contrôleur 10 considère l'utilisateur comme inconnu.

Cette opération effectuée, le contrôleur 10 retourne à l'étape E100.

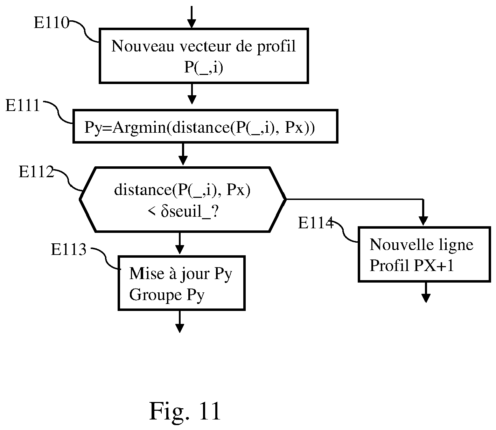

La Fig. 11 représente un exemple d'algorithme de remplissage du tableau profil groupe dans le cas où le système ne comprend pas d'interface homme machine.

Sans interface homme machine 50, un tableau de profil est formé dans lequel les utilisateurs sont remplacés par des groupes d'utilisateurs.

A l'étape E110, le contrôleur 10 sélectionne un nouveau vecteur de profil P(_,i).

A l'étape E111, le contrôleur 10 détermine la distance minimale séparant le vecteur de profil P(u,i) de chaque vecteur de profil Px mémorisé dans le tableau profil de groupe. Le vecteur de profil pour lequel la distance est minimale est noté Py.

A l'étape E112, le contrôleur 10 vérifie si la distance minimale obtenue est inférieure à un seuil $\delta$seuil_2 prédéterminé. Dans l'affirmative, le contrôleur 10 passe à l'étape E113. Dans la négative, le contrôleur 10 passe à l'étape E114.

A l'étape suivante E113, le contrôleur 10 met à jour le vecteur de profil Py de la manière suivante :

$$Py=(P(\_,i)+Py)/2 \text{ et affecte le vecteur de profil Py au groupe.}$$

et affecte le vecteur de profil Py au groupe.

Cette opération effectuée, le contrôleur 10 retourne à l'étape E110.

A l'étape E114, le contrôleur 10 considère le groupe comme un nouveau groupe et crée une nouvelle ligne dans le tableau profil groupe.

Cette opération effectuée, le contrôleur 10 retourne à l'étape E110.

## Revendications

1. Procédé de détermination de profils de consommation d'eau chaude pour des besoins d'hygiène corporelle, **caractérisé en ce que** le procédé comporte les étapes de :

   - obtention, par l'intermédiaire d'une interface homme machine et pendant une période de temps donnée, de données identifiant l'individu désirant prendre la douche,
   - mesure (E30) du débit d'eau chaude consommée,
   - extraction, (E31) à partir du débit d'eau chaude mesuré d'une consommation d'eau chaude pour des besoins d'hygiène corporelle, de variables caractéristiques,
   - formation (E31) d'un profil de la consommation d'eau chaude consommée pour les besoins d'hygiène corporelle,
   - mémorisation du profil de consommation d'eau chaude pour les besoins d'hygiène corporelle de l'individu identifié,

   et après une période donnée :

   - mesure (E30) du débit d'eau chaude consommée,
   - formation (E31) d'un nouveau profil de la consommation d'eau chaude consommée pour les besoins d'hygiène corporelle,
   - détermination de la distance minimale séparant le nouveau profil avec des profils mémorisés d'individus identifiés,
   - affectation du nouveau profil à l'individu identifié du profil ayant la distance minimale avec le nouveau profil si la distance minimale est inférieure à un seuil prédéterminé,
   - identification, après la période donnée, de l'individu ayant consommé de l'eau chaude pour des besoins d'hygiène corporelle, à partir des mesures du débit d'eau chaude consommée et du profil de l'individu.
   - détermination que l'individu est inconnu si la distance minimale n'est pas inférieure au seuil prédéterminé.

2. Procédé selon la revendication 1, **caractérisé en ce que** la consommation d'eau chaude pour des besoins d'hygiène corporelle est une consommation liée à une prise de douche ou d'un bain.

3. Procédé selon la revendication 2, **caractérisé en ce que** le procédé comporte les étapes de détermination du début de la consommation d'eau chaude pour les besoins d'hygiène corporelle après la période donnée et de détermination de la fin de la consommation d'eau chaude pour les besoins d'hygiène corporelle pendant ou après la période donnée.

4. Procédé selon la revendication 2, **caractérisé en ce que** le procédé comporte en outre les étapes de :

   - détermination du début de la consommation d'eau chaude pour les besoins d'hygiène corporelle,
   - détermination de la fin de la consommation d'eau chaude pour les besoins d'hygiène corporelle.

5. Dispositif de détermination de profils de consommation d'eau chaude pour des besoins d'hygiène corporelle, **caractérisé en ce que** le dispositif comporte :

   - obtention, par l'intermédiaire d'une interface homme machine et pendant une période de temps donnée, de données identifiant l'individu désirant prendre la douche,
   - mesure (E30) du débit d'eau chaude consommée,
   - extraction, (E31) à partir du débit d'eau chaude mesuré d'une consommation d'eau chaude pour des besoins d'hygiène corporelle, de variables caractéristiques,
   - formation (E31) d'un profil de la consommation d'eau chaude consommée pour les besoins d'hygiène corporelle,
   - mémorisation du profil de consommation d'eau chaude pour les besoins d'hygiène corporelle de l'individu identifié,

et après une période donnée :

- mesure (E30) du débit d'eau chaude consommée,
- formation (E31) d'un nouveau profil de la consommation d'eau chaude consommée pour les besoins d'hygiène corporelle,
- détermination de la distance minimale séparant le nouveau profil avec des profils mémorisés d'individus identifiés,
- affectation du nouveau profil à l'individu identifié du profil ayant la distance minimale avec le nouveau profil si la distance minimale est inférieure à un seuil prédéterminé,
- identification, après la période donnée, de l'individu ayant consommé de l'eau chaude pour des besoins d'hygiène corporelle, à partir des mesures du débit d'eau chaude consommée et du profil de l'individu.
- détermination que l'individu est inconnu si la distance minimale n'est pas inférieure au seuil prédéterminé.

10

20

30

Contrôleur

Ballon
Eau
chaude

25

Débit

50

Interface
H/M

Fig. 1

10

205

Interface
Réseau

200

Proc

202

ROM

203

RAM

204

SD

206

Interface
Ballon

201

Fig. 2

E30 ⌐ | Obtention données débitmètre |

↓

E31 ⌐ | Détection d'usage/extraction
variables caractéristiques |

↓

E32 ⌐ | Classification des profils |

Fig. 3

40

Fig. 4

Fig. 5

E60 — Nouvel échantillon

E61 — Sommation différenciation

E62 — Détection extrémum

E63 — Validation détection fin de douche ?

E64 — Classification

# Fig. 6

E70 — Attente détection changement d'état ◄— Initialisation ◄—

E75

E71 — Première détection et début soutirage ?

E72 — Sauvegarde indice

E73 — Durée soutirage Conforme ?

E74 — Sauvegarde indice variables

Fig. 7

E80 — Identification utilisateur

E81 — Attente détection changement d'état

E82 — Première détection et début soutirage ?

E83 — Sauvegarde indice

E84 — Sauvegarde indice variables

E85 — Mise à jour des seuils

Fig. 8

E90 — Nouveau vecteur de profil
P(u,i) utilisateur ?

E91 — Utilisateur u déjà
dans tableau?

E92 — Py=Argmin(distance(P(u,i), Px))

E93 — distance(P(u,i), Px)
< δseuil_1 ?

E95 — Mise à jour de Py

E96 — Utilisateur = u

E97 — Nouvelle ligne profil
Utilisateur = u

Fig. 9

E100 — Nouveau vecteur de profil
P(_,i) utilisateur u

E101 — Py=Argmin(distance(P(_,i), Px))

E102 — distance(P(_,i), Py)
< δseuil_2?

E104 — Utilisateur =
inconnu

E103 — Utilisateur =
Utilisateur y

Fig. 10

E110 Nouveau vecteur de profil
P(_,i)

E111 Py=Argmin(distance(P(_,i), Px))

E112 distance(P(_,i), Px)
< $\delta$seuil_ ?

E114 Nouvelle ligne
Profil PX+1

E113 Mise à jour Py
Groupe Py

Fig. 11

Europäisches Patentamt
European Patent Office
Office européen des brevets

## RAPPORT DE RECHERCHE EUROPEENNE

Numéro de la demande

EP 20 21 6522

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HYOSUN KWON ET AL: "The Connected Shower", PROCEEDINGS OF THE ACM ON INTERACTIVE, MOBILE, WEARABLE AND UBIQUITOUS TECHNOLOGIES, ACM, 2 PENN PLAZA, SUITE 701NEW YORKNY10121-0701USA, vol. 2, no. 4, 27 décembre 2018 (2018-12-27), pages 1-22, XP058423734, DOI: 10.1145/3287054 * abrégé; figures 1,2; tableau 1 * * pages 5,6 * * pages 1-3 * * page 8 * * pages 9,11,14 * | 1-5 | INV. G06Q30/02 F24D19/10 |
| X | WO 2004/095327 A2 (ELECTRICITE DE FRANCE [FR]; ALBOUY JEAN-MICHEL [FR]) 4 novembre 2004 (2004-11-04) * page 4, lignes 5-28 * * page 17, lignes 10-25 * * page 34, lignes 23-30 * * page 44, lignes 3-29 * * page 45, lignes 11-26 * | 1-5 | DOMAINES TECHNIQUES RECHERCHES (IPC) G06Q F24H F24D |
| X | FR 2 976 687 A1 (INST CATHOLIQUE D ARTS ET METIERS ICAM [FR]) 21 décembre 2012 (2012-12-21) * abrégé; revendication 1; figures 1,9 * * page 1, lignes 1-14 * * page 2, ligne 14 - page 4, ligne 26 * * page 6, ligne 15 - page 7, ligne 31 * * page 8, ligne 11 - page 9, ligne 15 * * page 12, ligne 3 - page 15, ligne 22 * * page 16, ligne 21 - page 17, ligne 14 * * page 18, ligne 1 - page 19, ligne 9 * | 1-5 | |

-/--

Le présent rapport a été établi pour toutes les revendications

| Lieu de la recherche | Date d'achèvement de la recherche | Examinateur |
|---|---|---|
| Munich | 7 avril 2021 | Bauer, Rodolphe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 20 21 6522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2017/103069 A1 (SUEZ GROUPE [FR]) 22 juin 2017 (2017-06-22) * abrégé; figures 1,3,4,7 * * page 2, ligne 18 - page 3, ligne 4 * * page 5, lignes 6-19 * * page 8, ligne 4 - page 9, ligne 31 * * page 10, ligne 25 - page 11, ligne 15 * * page 12, lignes 1-7 * * page 14, lignes 1-30 * * page 22, lignes 1-6 * * page 23, ligne 34 - page 24, ligne 31 * | 1-5 | |
| A | FR 3 019 289 A1 (DELLA-MONICA GABRIEL [FR]) 2 octobre 2015 (2015-10-02) * abrégé; figures 4-6 * * page 2, ligne 20 - page 3, ligne 24 * * page 8, lignes 1-33 * * page 14, lignes 22-32 * | 1-5 | |
| A | US 2011/203364 A1 (STAAKE THORSTEN [DE] ET AL) 25 août 2011 (2011-08-25) * abrégé; figures 1,2,4,5,8,9 * * alinéas [0003], [0004], [0009], [0013] - [0015] * * alinéas [0024] - [0045] * * alinéas [0070], [0071], [0074], [0076], [0080] * | 1-5 | DOMAINES TECHNIQUES RECHERCHES (IPC) |
| A | BARCELLONA CETTINA ET AL: "Multi-party metering: An architecture for privacy-preserving profiling schemes", 2013 SUSTAINABLE INTERNET AND ICT FOR SUSTAINABILITY (SUSTAINIT), IEEE, 30 octobre 2013 (2013-10-30), pages 1-6, XP032533562, DOI: 10.1109/SUSTAINIT.2013.6685212 * abrégé * * III User Profiling * | 1-5 | |

Le présent rapport a été établi pour toutes les revendications

| Lieu de la recherche | Date d'achèvement de la recherche | Examinateur |
|---|---|---|
| Munich | 7 avril 2021 | Bauer, Rodolphe |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 21 6522

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2021

| Document brevet cité au rapport de recherche | | Date de publication | Membre(s) de la famille de brevet(s) | | Date de publication |
|---|---|---|---|---|---|
| WO 2004095327 | A2 | 04-11-2004 | AU | 2003246786 A1 | 19-11-2004 |
| | | | EP | 1616296 A2 | 18-01-2006 |
| | | | WO | 2004095327 A2 | 04-11-2004 |
| FR 2976687 | A1 | 21-12-2012 | AUCUN | | |
| WO 2017103069 | A1 | 22-06-2017 | CN | 108475257 A | 31-08-2018 |
| | | | EP | 3391240 A1 | 24-10-2018 |
| | | | FR | 3045867 A1 | 23-06-2017 |
| | | | KR | 20180095653 A | 27-08-2018 |
| | | | SG | 10202004697T A | 29-06-2020 |
| | | | SG | 11201804864V A | 30-07-2018 |
| | | | WO | 2017103069 A1 | 22-06-2017 |
| FR 3019289 | A1 | 02-10-2015 | CN | 106413908 A | 15-02-2017 |
| | | | EP | 3126786 A1 | 08-02-2017 |
| | | | FR | 3019289 A1 | 02-10-2015 |
| | | | IL | 248075 A | 30-06-2020 |
| | | | US | 2017059384 A1 | 02-03-2017 |
| | | | WO | 2015150247 A1 | 08-10-2015 |
| US 2011203364 | A1 | 25-08-2011 | DE | 102008039272 A1 | 25-02-2010 |
| | | | DE | 102008064677 A1 | 02-12-2010 |
| | | | EP | 2316007 A1 | 04-05-2011 |
| | | | US | 2011203364 A1 | 25-08-2011 |
| | | | WO | 2010026071 A1 | 11-03-2010 |

EPO FORM P0460

Pour tout renseignement concernant cette annexe : voir Journal Officiel de l'Office européen des brevets, No.12/82